# EUROPÄISCHE PATENTSCHRIFT

(11) **EP 2 898 714 B1**
(45) Veröffentlichungstag und Bekanntmachung des Hinweises auf die Patenterteilung: **28.12.2016**
(21) Anmeldenummer: 13752837.8
(22) Anmeldetag: 22.08.2013
(51) Int. Cl.: H04W 12/06, H04W 48/18, H04W 88/06

(54) **IDENTITÄTSMODUL ZUM AUTHENTISIEREN EINES TEILNEHMERS IN EINEM KOMMUNIKATIONSNETZWERK**
IDENTITY MODULE FOR USER AUTHENTICATION IN A COMMUNICATION NETWORK
MODULE D'IDENTITE POUR L'AUTHENTIFICATION D'UN UTILISATEUR DANS UN RESEAU DE COMMUNICATION

(30) Priorität: 19.09.2012 DE 102012018540
(43) Veröffentlichungstag der Anmeldung: 29.07.2015
(73) Patentinhaber: Giesecke & Devrient GmbH, 81677 München (DE)
(72) Erfinder: HARTEL, Karl, Eglof, 80689 München (DE); HUBER, Ulrich, 81475 München (DE); NITSCH, Nils, 85570 Markt Schwaben (DE)
(86) Internationale Anmeldenummer: PCT/EP2013/002529
(87) Internationale Veröffentlichungsnummer: WO 2014/044348

(56) Entgegenhaltungen:
- FR-A1- 2 941 585
- US-A1- 2005 221 801
- US-A1- 2009 024 728
- US-A1- 2011 117 909

## Beschreibung

Die Erfindung betrifft ein Teilnehmeridentitätsmodul zum Authentisieren eines Teilnehmers an einem Kommunikationsnetzwerk, ein Verfahren zum Verwalten eines Teilnehmeridentitätsmoduls mit einem ersten Satz von Teilnehmeridentitätsdaten und einem zweiten Satz von Teilnehmeridentitätsdaten, eine Verwendung des Teilnehmeridentitätsmoduls sowie ein System aus Teilnehmeridentitätsmodul und einer entfernten Serverinstanz.

Teilnehmeridentitätsdaten dienen dazu, einen Teilnehmer in einem Kommunikationsnetzwerk, beispielsweise einem digitalen Mobilfunknetzwerk, eindeutig zu identifizieren und/oder zu authentisieren. Durch diese Teilnehmeridentitätsdaten ist es einem Betreiber eines Kommunikationsnetzwerks möglich, die Nutzung eines vom Netzbetreiber angebotenen Dienstes, beispielsweise eines Sprach- und/ oder Datendienstes, jedem Teilnehmer in dem Kommunikationsnetzwerk eindeutig zuzuordnen. Weiterhin ist es dem Betreiber möglich, einen Netzzugang, also die Einbuchung in das Kommunikationsnetz, zu ermöglichen, sobald eine Authentisierung des Teilnehmers stattgefunden hat oder den Netzugang zu verweigern, falls eine Authentisierung des Teilnehmers nicht möglich ist.

Diese Teilnehmeridentitätsdaten sind in ein Teilnehmeridentitätsmodul eingebracht, auch als Subscriber Identity Modul (SIM) bezeichnet. Üblicherweise wird jedes Endgerät mit einem derartigen Teilnehmeridentitätsmodul ausgestattet, um Dienste des Kommunikationsnetzwerkes nutzen zu können.

Meldet sich ein Teilnehmer an einem Kommunikationsnetz an, so wird mittels der Teilnehmeridentitätsdaten festgestellt, ob der Teilnehmer im Kommunikationsnetz bekannt ist und welche Dienste der Teilnehmer in dem Netzwerk nutzen darf. Ein nicht eindeutig identifizierbarer bzw. authentifizierbarer Teilnehmer ist zur Nutzung der Dienste nicht berechtigt und wird vom Netzwerk abgewiesen.

Es ist bekannt, in ein Teilnehmeridentitätsmodul zumindest einen ersten Satz und einen zweiten Satz von Teilnehmeridentitätsdaten einzubringen, zwischen denen umgeschaltet werden kann. Derartige Teilnehmeridentitätsmodule werden auch als Dual-IMSI, Multi-IMSI und/ oder Auto-Roamer SIM bezeichnet.

Das Verwalten der Teilnehmeridentitätsdaten sowie das Umschalten von dem ersten Satz von Teilnehmeridentitätsdaten auf den zweiten Satz von Teilnehmeridentitätsdaten im Teilnehmeridentitätsmodul erfolgt zumeist mittels einer entfernten Serverinstanz, beispielsweise einer Netzwerkinstanz zur Verwaltung von Teilnehmeridentitätsdaten, auch Subscription Manager genannt. Die entfernte Serverinstanz sendet dazu entsprechende Verwaltungs- und Umschaltkommandos an das jeweilige Teilnehmeridentitätsmodul. Das Verwalten und Umschalten wird dann vom Betriebssystem des Teilnehmeridentitätsmoduls durchgeführt. Alternativ wird das Verwalten und Umschalten von einem betriebssystemnahen Applikationscode des Teilnehmeridentitätsmoduls durchgeführt.

Problematisch daran ist, dass in dem Teilnehmeridentitätsmodul keine oder nur statisch ausgebildete Umschaltstrategien, beispielsweise bei fehlender Netzabdeckung, überlastetem Netzwerk, oder spezifischen Standortkriterien als Umschaltcodefunktionen implementiert sind. Diese Funktionen sind fester Bestandteil des Teilnehmeridentitätsmoduls und unveränderlich implementiert. Somit ist das Teilnehmeridentitätsmodul nicht in der Lage auf aktuelle Umwelteinflüsse, Netzwerkeinflüsse, Endgeräteeinflüsse etc. angemessen zu reagieren. Somit kann das Teilnehmeridentitätsmodul nicht auf Basis von individuellen Vorgaben, aktuellen Netzwerkparametern und/ oder Endgeräteeigenschaften verwaltet werden. Stattdessen werden die implementierten statischen Verwaltungs- und Umschaltfunktionen stets aufgerufen und vollständig abgearbeitet.

Alle möglichen Besonderheiten oder Einflüsse, die bei einer Verwaltung und/ oder Umschaltung des Teilnehmeridentitätsmoduls zu beachten sind, bereits innerhalb den Betriebssystemfunktionen zu erfassen und zu berücksichtigen, ist aufgrund der Vielzahl von Einflussmöglichkeiten durch das Netzwerk, des Endgeräts, des momentanen Aufenthaltsorts sowie der Vielzahl von Verwaltungskommandos unmöglich. Weiterhin können im Lebenszyklus des Teilnehmeridentitätsmoduls zusätzlich Lerneffekte auftreten, die ein verbessertes Verwalten, insbesondere Umschalten, ermöglichen. Darüber hinaus können auch bessere Methoden nach Auslieferung des Teilnehmeridentitätsmoduls entwickelt werden, die dann für alle im Feld befindlichen Teilnehmeridentitätsmodule nicht nutzbar sind oder nur durch einen kostenintensiven Austausch der Module genutzt werden können.

Aus der FR 2941585 A1 geht eine Kommunikationseinrichtung mit zumindest zwei Schnittstellen hervor, wobei die erste Schnittstelle einen Austausch von Daten zwischen einem Terminal und der Kommunikationseinrichtung gestattet und die zweite Schnittstelle einen Austausch von Daten zwischen der Kommunikationseinrichtung und dem Internet gestattet.

Aus der am 14. August 2012 beim Deutschen Patent- und Markenamt eingereichten deutschen Anmeldung, Anmeldenummer DE 102012016166.2 der Anmelderin ist bekannt, das Umschaltverhalten in Abhängigkeit von Netzwerkparametern anzupassen, um eine möglichst erfolgreiche Netzeinbuchung nach dem Umschalten zu gewährleisten. Aufbauend auf der darin beschriebenen Lösung liegt der hier vorliegenden Erfindung die Aufgabe zugrunde, die Verwaltung des Teilnehmeridentitätsmoduls weiter zu flexibilisieren. Auf die Offenbarung der DE 102012016166.2 wird hierin vollumfänglich Bezug genommen.

Die Aufgabe der Erfindung wird durch die in den nebengeordneten unabhängigen Patentansprüchen beschriebenen Maßnahmen gelöst. Vorteilhafte Ausgestaltungen sind in den jeweils abhängigen Ansprüchen beschrieben.

Die Aufgabe wird insbesondere durch ein Teilnehmeridentitätsmodul zum Authentisieren eines Teilnehmers an einem Kommunikationsnetzwerk gelöst, wobei das Teilnehmeridentitätsmodul einen ersten Satz von Teilnehmeridentitätsdaten zum Authentisieren des Teilnehmers und zumindest einen zweiten Satz von Teilnehmeridentitätsdaten zum Authentisieren des Teilnehmers aufweist, wobei sich der erste Satz von Teilnehmeridentitätsdaten von dem zweiten Satz von Teilnehmeridentitätsdaten unterscheidet. Weiterhin weist das Teilnehmeridentitätsmodul ein Mittel zum Verwalten des ersten und zweiten Satzes von Teilnehmeridentitätsdaten auf, wobei das Verwalten durch statische Verwaltungsfunktionen realisiert ist. Das Verfahren zeichnet sich dadurch aus, dass das Mittel zum Verwalten weiterhin Verwaltungsapplikationscode aufweist und dieser Verwaltungsapplikationscode ein variables Verwalten durch Anpassen der statischen Verwaltungsfunktionen an die Umgebungsparameter des Teilnehmeridentitätsmoduls ermöglicht.

Das erfindungsgemäße Verfahren basiert auf der Aufteilung des Mittels zum Verwalten der Teilnehmeridentitätsdaten in statische Verwaltungsfunktionen und variablen Verwaltungsapplikationscode, vorzugsweise in Form von Java-Applikationscode. Dabei sind statische Verwaltungsfunktionen als Bestandteil des Teilnehmeridentitätsmoduls fest implementiert. Um die Verwaltungsfunktionen an die jeweilige Umweltbedingung anzupassen, werden diese erfindungsgemäß über Verwaltungsapplikationscode, vorzugsweise Java-Applikationscode, variabel angesteuert und ausgeführt. Der Verwaltungsapplikationscode legt somit beispielsweise den eigentlichen Umschaltzeitpunkt für das Umschalten mittels statischer Umschaltfunktionen fest.

Als Umgebungsparameter werden erfindungsgemäß alle Einflüsse und Gegebenheiten im Umfeld des Teilnehmeridentitätsmoduls angesehen. Beispielhaft seien Netzwerkparameter, Netzstatusangaben, Aktualisierungen von Dateien des Teilnehmeridentitätsmoduls, Parameter des Endgeräts, in dem das Teilnehmeridentitätsmodul betriebsfähig ist, genannt.

Als statische Verwaltungsfunktionen werden insbesondere Betriebssystemfunktionen und/ oder betriebssystemnah implementierter Programmcode verstanden. Dabei wird insbesondere als statische Umschaltfunktion das Anpassen des Dateisystems an den zweiten Satz von Teilnehmeridentitätsdaten verstanden. Als statische Verwaltungsfunktion wird insbesondere das Ersetzen der Authentisierungsdaten (auch als Triplet/Quintet bezeichnet) des ersten Satzes von Teilnehmeridentitätsdaten, beispielsweise der Authentisierungsalgorithmus A3, A5 und/ oder A8 sowie der Authentisierungsschlüssel Ki, durch die entsprechenden Authentisierungsdaten des zweiten Satzes von Teilnehmeridentitätsdaten verstanden. Als statische Umschaltfunktion wird ferner insbesondere das Ersetzen eines teilnehmerspezifischen OTA-Schlüssels zur OTA-Kommunikation mit dem Kommunikationsnetz verstanden. Als statische Verwaltungsfunktion wird ferner insbesondere das Ersetzen von teilnehmerspezifischen Applikationen, beispielsweise teilnehmeridentitätsdatenspezifische JAVA Applets, verstanden. Die statischen Verwaltungsfunktionen sind sowohl für das Laden, das Aktivieren, das Umschalten, das Deaktivieren und/ oder das Löschen der Teilnehmeridentitätsdaten vorgesehen.

Das variable Verwalten wird insbesondere über erste Funktionen des Verwaltungsapplikationscodes realisiert. Diese Funktionen sind eingerichtet, Parameter des Kommunikationsnetzes, Statusangaben bezüglich des Kommunikationsnetzes, des Endgeräts und/oder des Teilnehmeridentitätsmoduls, den Zustandsangaben des Endgeräts sowie Zustandsangaben über Umweltbedingungen wie Aufenthaltsort, Roamingszenarien etc. individuell auszuwerten und somit das Verwalten jedes Teilnehmeridentitätsmoduls und der entsprechenden Teilnehmeridentitätsdaten anzupassen. Beispielsweise ist eine erste Funktion die Funktion "check_Network_Status" zum Überprüfen der prinzipiellen Einbuchung in das erste oder zweite Netzwerk in Abhängigkeit der Teilnehmeridentifikationsdaten bzw. zum Überprüfen eines Verlusts von Netzwerkverbindung trotz vorheriger erfolgreicher Einbuchung in dieses Netzwerk. Beispielsweise ist eine erste Funktion die Funktion "check_MCC" zum Überprüfen des Aufenthaltsorts des Teilnehmeridentitätsmoduls. Beispielsweise ist eine erste Funktion die Funktion "set_waitingtime" zum Setzen einer teilnehmeridentitätsmodulindividuellen Wartezeit. Beispielsweise ist eine erste Funktion die Funktion "check_Time-out", zur Überpüfung des Ablaufs der Wartezeit im Fall eines erfolglosen Einbuchungsversuchs oder einer ausbleibenden Bestätigung vom Netzwerk nach erfolgter Einbuchung.

Das variable Verwalten umfasst insbesondere auch das Laden von weiteren Sätzen von Teilnehmeridentitätsdaten in das Teilnehmeridentitätsmodul. Dabei wird mittels der ersten Funktionen das Ladekommando analysiert, insbesondere welcher spezielle Lademechanismus im Teilnehmeridentitätsmodul implementiert ist und welcher Lademechanismus netzwerkseitig ausgewählt wurde. Auf Basis der Analyse wird dann das Teilnehmeridentitätsmodul mittels der ersten Funktionen initialisiert, um die Teilnehmeridentitätsdaten richtig laden zu können. Vertrauliche Daten wie Authentisierungsinformationen, Authentisierungsschlüssel, OTA Schlüssel und dergleichen werden anhand der ersten Funktionen mittels einer zusätzlichen Sicherheitsschicht unter dem Standard GSM 03.48 in das Teilnehmeridentitätsmodul eingebracht.

Das variable Verwalten umfasst insbesondere auch das Aktivieren von Teilnehmeridentitätsdaten, d.h. eines Satzes von Teilnehmeridentitätsdaten. Das Aktivieren ist notwendig, um die Teilnehmeridentitätsdaten im Teilnehmeridentitätsmodul zur Authentisierung/ Identifizierung des Teilnehmers im Kommunikationsnetz verwenden zu können. Bei der Aktivierung wird der Status des Satzes von Teilnehmeridentitätsdaten von "neu" auf "aktiviert" umgesetzt. Mit der Aktivierung wird einerseits die Datenintegrität des Satzes von Teilnehmeridentitätsdaten bestätigt. Die Datenintegrität wird dabei anhand der ersten Funktionen überprüft, insbesondere mittels einer CRC-Prüfsumme. Nur wenn die CRC-Prüfsumme der gespeicherten zu aktivierenden Teilnehmeridentitätsdaten gleich mit einer vom Netzwerk gesendeten und vom Teilnehmeridentitätsmodul empfangenen CRC-Prüfsumme ist, werden die Teilnehmeridentitätsdaten aktiviert. Mit der Aktivierung wird andererseits der bisher aktivierte Satz von Teilnehmeridentitätsdaten für weitere netzwerkseitige Aktualisierungen gesperrt.

Das variable Verwalten umfasst insbesondere auch das Deaktivieren von Teilnehmeridentitätsdaten, d.h. eines Satzes von Teilnehmeridentitätsdaten. Dabei wird ein Deaktivierungskommando netzwerkseitig ausgesendet und vom Teilnehmeridentitätsmodul empfangen. Durch das Deaktivieren können die Teilnehmeridentitätsdaten im Teilnehmeridentitätsmodul für eine Authentisierung/Identifizierung des Teilnehmers im Kommunikationsnetz nicht mehr verwendet werden. Bei der Deaktivierung wird der Status der Teilnehmeridentitätsdaten, d.h. des Satzes von Teilnehmeridentitätsdaten, von "aktiviert" auf "deaktiviert" umgesetzt. Vor dem Deaktivieren überprüfen die ersten Funktionen den Status der Teilnehmeridentitätsdaten. Ist der zu deaktivierende Satz von Teilnehmeridentitätsdaten der einzige aktivierte Satz von Teilnehmeridentitätsdaten auf dem Teilnehmeridentitätsmodul, wird das Deaktivieren unterbunden, um eine netzwerkseitige Erreichbarkeit des Teilnehmeridentitätsmoduls weiter zu gewährleisten.

Das variable Verwalten umfasst insbesondere auch das variable Umschalten von ersten Teilnehmeridentitätsdaten auf zweite Teilnehmeridentitätsdaten, d.h. von einem ersten Satz von Teilnehmeridentitätsdaten auf einen zweiten Satz von Teilnehmeridentitätsdaten. Dabei sind prinzipiell alle in dem Teilnehmeridentitätsmodul enthaltenen Sätze von Teilnehmeridentitätsdaten umschaltbar. Sind beispielsweise ein erster, zweiter und dritter Satz von Teilnehmeridentitätsdaten im Teilnehmeridentitätsmodul vorhanden, kann flexibel zwischen den drei Teilnehmeridentitätsdaten, d.h. den drei Sätzen von Teilnehmeridentitätsdaten, umgeschaltet werden. Dabei ist stets nur der erste, der zweite oder der dritte Satz von Teilnehmeridentitätsdaten aktiviert.

Das variable Verwalten umfasst insbesondere auch das variable Löschen von Teilnehmeridentitätsdaten. Dabei wird der Speicherbereich frei und kann zum Laden/ Ablegen neuer Teilnehmeridentitätsdaten verwendet werden.

Bei einem Teilnehmeridentitätsmodul im Sinne der Erfindung handelt es sich um ein in Baugröße und Ressourcenumfang reduziertes Modul, welches einen Mikrocontroller und mindestens eine Datenschnittstelle zur Kommunikation mit einem Endgerät aufweist. Dieses Teilnehmeridentitätsmodul weist einen sicheren Speicherbereich auf, in dem die Teilnehmeridentitätsdaten sicher eingebracht sind, um Manipulations- und/ oder Missbrauchsversuche bei der Identifizierung und/ oder Authentisierung am Netzwerk zu verhindern. Das Teilnehmeridentitätsmodul ist mittels des Endgeräts betriebsfähig.

Bei dem Teilnehmeridentitätsmodul handelt es sich beispielsweise um eine Chipkarte, auch UICC oder SIM-Karte, in einem mobilen Funknetz mit, auf einem Chip gespeicherten maschinenlesbaren Teilnehmeridentitätsdaten des Teilnehmers. Derartige Teilnehmeridentitätsmodule werden mittels Kartenleseeinheiten in einem Endgerät betrieben und sind insbesondere dafür vorgesehen, aus dem Endgerät zum Zweck eines Austauschs oder der Verwendung in einem zweiten Endgerät entnommen werden zu können.

Alternativ handelt es sich bei dem Teilnehmeridentitätsmodul um einen integralen Bestandteil innerhalb des mobilen Endgeräts, beispielsweise einen fest verdrahteten elektronischen Baustein. Derartige Teilnehmeridentitätsmodule werden auch als embedded UICC (eUICC) bezeichnet. In dieser Bauform sind diese Teilnehmeridentitätsmodule nicht für eine Entnahme aus dem Endgerät vorgesehen und können prinzipiell nicht einfach ausgetauscht werden. Derartige Teilnehmeridentitätsmodule können auch als embedded Secure Elements, also als eine sichere Hardwarekomponente im mobilen Endgerät ausgestaltet sein.

Alternativ handelt es sich bei dem Teilnehmeridentitätsmodul um ein M2M-Modul. Diese Module dienen der Fernüberwachung, -kontrolle und - wartung von Endgeräten wie Maschinen, Anlagen und Systemen. Sie können alternativ auch für Zähleinheiten wie Stromzähler, Warmwasserzähler verwendet werden.

Alternativ ist das Teilnehmeridentitätsmodul als eine Softwarekomponente in einem vertrauenswürdigen Teil eines Betriebssystems, einer sogenannten Trusted Execution Environment (TEE) des Endgerätes ausgebildet. Das Teilnehmeridentitätsmodul ist dann beispielsweise innerhalb einer gesicherten Laufzeitumgebung in Form von darin ablaufenden Programmen, sogenannten Trustlets ausgebildet.

Teilnehmeridentitätsdaten im Sinn der Erfindung sind zum einen Daten, die einen Teilnehmer eindeutig im Kommunikationsnetz identifizieren, beispielsweise eine International Mobile Subscriber Identity (IMSI) und/ oder teilnehmerspezifische Daten. Die IMSI ist das in einem Mobilfunkkommunikationsnetzwerk eindeutige Teilnehmeridentitätsdatum. Sie setzt sich zusammen aus dem Landescode MCC (Mobile Country Code), dem Netzwerkcode MNC (Mobile Network Code) und einer laufenden Nummer, die vom Netzbetreiber vergeben wird. Teilnehmeridentitätsdaten umfassen zusätzlich Statusangaben, wobei die Teilnehmeridentitätsdaten "aktiv", "inaktiv" und/oder "verwendet" als Status aufweisen können.

Ferner können Teilnehmeridentitätsdaten Daten sein, die einen Teilnehmer eindeutig am Kommunikationsnetz authentisieren, beispielsweise ein Authentisierungsalgorithmus, spezifische Algorithmusparameter, ein kryptografischer Authentisierungsschlüssel und/ oder ein kryptografischer Over-The-Air (OTA) Schlüssel.

Die Anzahl der Sätze von Teilnehmeridentitätsdaten auf dem Teilnehmeridentitätsmodul ist nicht beschränkt. Es ist vorstellbar, dass in Zukunft auf einem Teilnehmeridentitätsmodul dreißig oder mehr Sätze von Teilnehmeridentitätsdaten vorliegen.

Ein Teilnehmer im Sinn der Erfindung ist beispielsweise eine Person, die mittels des Endgeräts auf Dienste des Kommunikationsnetzes zugreifen möchte. Als ein Teilnehmer ist auch ein Endgerät in einer M2M-Umgebung zu verstehen.

Ein Kommunikationsnetzwerk im Sinn der Erfindung ist eine technische Einrichtung, auf der die Übertragung von Signalen unter Identifizierung und/ oder Authentisierung des Kommunikationsteilnehmers stattfindet, wodurch Dienste angeboten werden. Das Kommunikationsnetz ist bevorzugt in Mobilfunkzellen aufgebaut, wobei die Größe einer Funkzelle abhängig von meteorologischen und geografischen Gegebenheiten sowie der verwendeten Funkantenne. Insbesondere wird in dieser Erfindung unter einem Mobilfunknetz beispielsweise das "Global System for Mobile Communications", kurz GSM als Vertreter der zweiten Generation oder das "General Packet Radio Service", kurz GPRS bzw. "Universal Mobile Telecommunications System", kurz UMTS als Vertreter der dritten Generation oder das "Long Term Evolution", kurz LTE, als Vertreter der vierten Generation verstanden.

In einer bevorzugten Ausgestaltung ist der Verwaltungsapplikationscode über eine Luftschnittstelle des Kommunikationsnetzwerks aktualisierbar und/ oder austauschbar. Durch diese Ausgestaltung wird das Mittel zum Verwalten auf dem aktuellsten Stand gehalten und kann ggf. auch kurzfristig, beispielsweise im Rahmen eines Roamingszenarios, an die neuen Parameter und Bedingungen angepasst werden. Auch eine Änderung von Roaming-Übereinkünften kann dadurch angepasst werden. Änderungen des Endgeräts, beispielsweise im Rahmen der Aktualisierung des Betriebssystems des Endgeräts können dadurch angepasst werden.

In einer bevorzugten Ausgestaltung sind die statischen Verwaltungsfunktionen zweite Funktionen, wobei die ersten Funktionen des Verwaltungsapplikationscodes mittels einer Programmierschnittstelle auf diese zweiten Funktionen zugreifen. Somit bleiben die hart implementierten zweiten Funktionen stets betriebsfähig und können durch die Programmierschnittstelle adaptiv angewendet werden. Die Programmierschnittstelle stellt dann die Funktionalität zum Verwalten mittels der zweiten Funktionen bereit, während die ersten Funktionen das jeweilige Verwaltungskommando auswerten, den Verwaltungserfolg überwachen, und eine adaptive Rückschaltstrategie entwerfen/ anwenden. Verwaltungskommandos sind insbesondere das Ladekommando zum Laden neuer Teilnehmeridentitätsdaten, das Aktivierungskommando zum Aktivieren von Teilnehmeridentitätsdaten, das Umschaltkommando zum Umschalten von ersten auf zweite Teilnehmeridentitätsdaten (d.h. von einem ersten Satz von Teilnehmeridentitätsdaten zu einem zweiten Satz von Teilnehmeridentitätsdaten), das Deaktivierungskommando zum Deaktivieren von Teilnehmeridentitätsdaten und/ oder das Löschkommando zum Löschen von Teilnehmeridentitätsdaten.

In einer bevorzugten Ausgestaltung umfassen die ersten Funktionen das Überwachen von aktuellen Standortparametern. Wechselt insbesondere das Aufenthaltsland, was durch einen geänderten Mobile Country Code, kurz MCC vom Netzwerk angezeigt wird, muss das Mittel zum Verwalten aufgrund der Umleitung der Netzwerkdienste mittels des besuchten Kommunikationsnetz ggf. zeitlich verzögert werden. Insbesondere das Umschalten und Zurückschalten auf ursprüngliche (erste) Teilnehmeridentitätsdaten sollte zeitlich verzögert werden.

In einer bevorzugten Ausgestaltung umfassen die ersten Funktionen das Generieren von Warteperioden. Somit wird in Abhängigkeit der Verfügbarkeit von Netzwerkdiensten das Löschen, Aktivieren, Deaktivieren und/ oder Umschalten bzw. Rückschalten koordiniert, wodurch eine harte Implementierung mit einer ggf. verfrühten Umschaltung bzw. Rückschaltung verhindert und benutzerfreundlich agiert wird.

In einer bevorzugten Ausgestaltung umfassen die ersten Funktionen das adaptive Zurückschalten zwischen dem ersten Satz von Teilnehmeridentitätsdaten und dem zweiten Satz von Teilnehmeridentitätsdaten. Die statischen Verwaltungsfunktionen sehen ein statisches Zurückschalten vor, sollte das Einbuchen in das neue Netz mittels der umgeschalteten Teilnehmeridentitätsdaten fehlschlagen. Aufgrund von Netzwerkbegebenheiten ist es ggf. erwünscht, das Zurückschalten erst nach dem Ablauf einer definierten Wartezeit durchzuführen. Somit wäre eine erste Funktion: das Setzen einer Wartezeit in Abhängigkeit der Netzwerkparameter sowie die erneute Analyse der Netzwerksituation nach Ablauf der Wartezeit, bevor zurückgeschaltet wird. Das Zurückschalten ist dann per se Teil der zweiten Funktionen, die Analyse, das Setzen der Wartezeit sowie die erneute Analyse sind dann Teil der ersten Funktionen.

In einer Ausgestaltung der Erfindung umfassen die variablen Verwaltungsfunktionen das Generieren von Bestätigungsnachrichten auf Anfrage der entfernten Serverinstanz.

In einer alternativen Ausgestaltung umfassen die ersten Funktionen das adaptive Umschalten zwischen den ersten Teilnehmeridentitätsdaten und den zweiten Teilnehmeridentitätsdaten, d.h. dem ersten Satz von Teilnehmeridentitätsdaten und dem zweiten Satz von Teilnehmeridentitätsdaten, wobei das Umschalten von der entfernten Serverinstanz mittels Umschaltkommando initiiert wird. Dabei wird mittels statischer Verwaltungsfunktionen sofort umgeschaltet. Die ersten Funktionen überprüfen nun den Status der harten Umschaltung, um wieder zurückschalten, wenn beispielsweise das Netzwerk nach Ablauf einer vordefinierten Wartezeit nicht erreichbar ist. Würde der zweite Netzwerkanbieter den zweiten Satz von Teilnehmeridentitätsdaten aus seinen Datenbanken entfernen, wäre ein Einbuchen des Teilnehmeridentitätsmoduls in das umgeschaltete zweite Netz nach der harten Umschaltung nicht mehr möglich. Die ersten Funktionen des Java-Applikationscode weisen zusätzlich eine Funktion zum Zurückschalten auf die zuletzt funktionierenden Teilnehmeridentitätsdaten auf, wodurch auf das zuletzt gültige Teilnehmerprofil zurückgeschaltet werden kann. Somit legt der variable Verwaltungsapplikationscode zur Absicherung die ersten Teilnehmeridentitätsdaten ab und markiert diese als zuletzt gültige Teilnehmeridentitätsdaten.

Das Teilnehmeridentitätsmodul muss dann in den Ausgangszustand zurückgeschaltet werden, was hierin als Rückschalten bezeichnet wird. Wird dies von den ersten Funktionen gesteuert, können weitere Netzwerkparameter geprüft werden, um das Rückschalten abzusichern.

Erfindungsgemäß wird die Aufgabe auch durch ein Verfahren zum Verwalten eines Teilnehmeridentitätsmoduls mit einem ersten Satz von Teilnehmeridentitätsdaten und einem zweiten Satz von Teilnehmeridentitätsdaten gelöst. Das Verfahren umfasst die Schritte: Erhalten eines Verwaltungskommandos im Teilnehmeridentitätsmodul; Verwalten des ersten Satzes von Teilnehmeridentitätsdaten und des zweiten Satzes von Teilnehmeridentitätsdaten mittels des Verwaltungskommandos. Das Verfahren zeichnet sich dadurch aus, dass vor dem Schritt des Verwaltens Verwaltungsapplikationscode im Teilnehmeridentitätsmodul gestartet wird, dass nach dem Schritt des Verwaltens durch den Verwaltungsapplikationscode Kommunikationsnetzwerkparameter ausgewertet werden und dass in Abhängigkeit des Auswertens der Schritt des Verwaltens adaptiert wird.

Erfindungsgemäß ist weiterhin eine Verwendung eines zuvor beschriebenen Teilnehmeridentitätsmoduls in einem mobilen Kommunikationsendgerät vorgesehen, um die gestellte Aufgabe zu lösen. Dabei ist das Kommunikationsendgerät eingerichtet, das Teilnehmeridentitätsmodul betriebsfähig zu machen.

Bei einem Endgerät im Sinn der Erfindung handelt es sich prinzipiell um ein Gerät oder eine Gerätekomponente, welches Mittel zur Kommunikation mit dem Kommunikationsnetzwerk aufweist, um Dienste des Kommunikationsnetzes nutzen zu können. Beispielsweise ist ein mobiles Endgerät wie ein Smart Phone, ein Tablet-PC, ein Notebook, ein PDA unter dem Begriff zu fassen. Unter dem Endgerät können beispielsweise auch Multimediaendgeräte wie digitale Bilderrahmen, Audiogeräte, Fernsehgeräte, E-Book-Reader verstanden werden, die ebenfalls Mittel zur Kommunikation mit dem Kommunikationsnetzwerk aufweisen. Beispielsweise umfasst der Begriff Endgeräte auch jegliche Art von Maschinen, Automaten, Fahrzeuge und Einrichtungen, die Mittel, insbesondere Mobilfunkmodems, zur Kommunikation mit dem Kommunikationsnetzwerk aufweisen.

Erfindungsgemäß ist weiterhin ein System bestehend aus zumindest einem zuvor beschriebenen Teilnehmeridentitätsmodul und einer entfernten Serverinstanz vorgesehen, wobei die entfernte Serverinstanz ein Verwaltungskommando zum Verwalten eines ersten Satzes von Teilnehmeridentitätsdaten und eines zweiten Satzes von Teilnehmeridentitätsdaten im Teilnehmeridentitätsmodul an das zumindest eine Teilnehmeridentitätsmodul sendet.

Nachfolgend werden anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:
- Figur 1: Ein Blockschaltbild eines erfindungsgemäßen Teilnehmeridentitätsmoduls
- Figur 2: Eine detaillierte Darstellung der Programm- und Datenhierarchie im erfindungsgemäßen Teilnehmeridentitätsmodul
- Figur 3: Ein erfindungsgemäßes Teilnehmerprofil mit Teilnehmeridentitätsdaten
- Figur 4: Ein Ablaufdiagramm des erfindungsgemäßen Verfahrens
- Figur 5: Eine Skizze eines beispielhaften Lebenszyklus von Teilnehmeridentitätsdaten

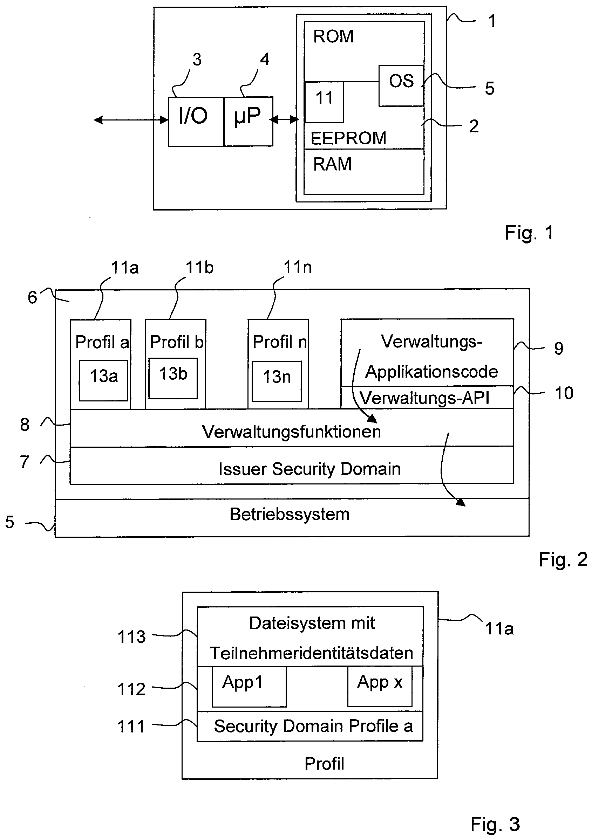

In Figur 1 ist ein Blockschaltbild eines Teilnehmeridentitätsmoduls 1 dargestellt. Dabei weist das Teilnehmeridentitätsmodul 1 eine Datenschnittstelle 3 auf. Eine zentrale Recheneinheit 4 verbindet die Datenschnittstelle 3 mit einem Speicher 2, der flüchtig (RAM) oder nicht flüchtig (ROM, EEPROM, FLASH) ausgebildet sein kann. Im Speicherbereich 2, insbesondere im nichtflüchtigen Speicherbereich, sind die Teilnehmerprofile 11 beinhaltend die Teilnehmeridentitätsdaten bzw. Sätze von Teilnehmeridentitätsdaten 13a, 13b,13n abgelegt. Dadurch können die Teilnehmeridentitätsdaten 13a,13b, 13n für das jeweilige Kommunikationsnetz angepasst werden. Insbesondere ist es möglich, dass die Teilnehmeridentitätsdaten 13 nach der Ausgabe des Teilnehmeridentitätsmoduls 1 an den Teilnehmer, beispielsweise via OTA oder OTI über die Datenschnittstelle 3 eingebracht werden können, wodurch ein flexiblerer Einsatz des Moduls 1 möglich ist. Im Speicherbereich 2 ist weiterhin das Betriebssystem 5 eingebracht, mit dessen Hilfe das Modul 1 betrieben werden kann. In Figur 2 ist eine beispielhafte Schichtendarstellung der Programm- und Datenhierarchie in einem erfindungsgemäßen Teilnehmeridentitätsmodul 1 dargestellt. Dabei ist im Speicherbereich 2 des Teilnehmeridentitätsmoduls 1 ein Betriebssystem 5 eingebracht. Das Betriebssystem 5 greift auf Hardwareresourcen des Teilnehmeridentitätsmoduls 1 zu. In dem Teilnehmeridentitätsmodul 1 ist wiederum eine virtuelle Maschine eingebracht, hier in Form einer Java Card virtuellen Maschine, kurz JCVM. Die JCVM wiederum stellt eine Laufzeitumgebung 6, auch als JCRE bekannt, zur Verfügung. Innerhalb der JCRE ist ein Sicherheitsbereich 7 ausgebildet, in dem der Modulherausgeber insbesondere einen modulindividuellen Schlüssel und modulindividuelle Applikationen einbringen kann. Dieser Sicherheitsbereich 7 ist für die Betreiber der Kommunikationsnetzwerke unzugänglich. Weiterhin sind in der JCRE Verwaltungsfunktionen 8 implementiert. Diese Verwaltungsfunktionen greifen auf teilnehmeridentitätsmodultypische Programmierschnittstellen wie die Open-Plattform-API, die SIM-API, USIM-API und/ oder die Java Card- API zu. Diese Schnittstellen stellen Pakete von Funktionen zur Verfügung, die von Programmen des Teilnehmeridentitätsmoduls 1 genutzt werden.

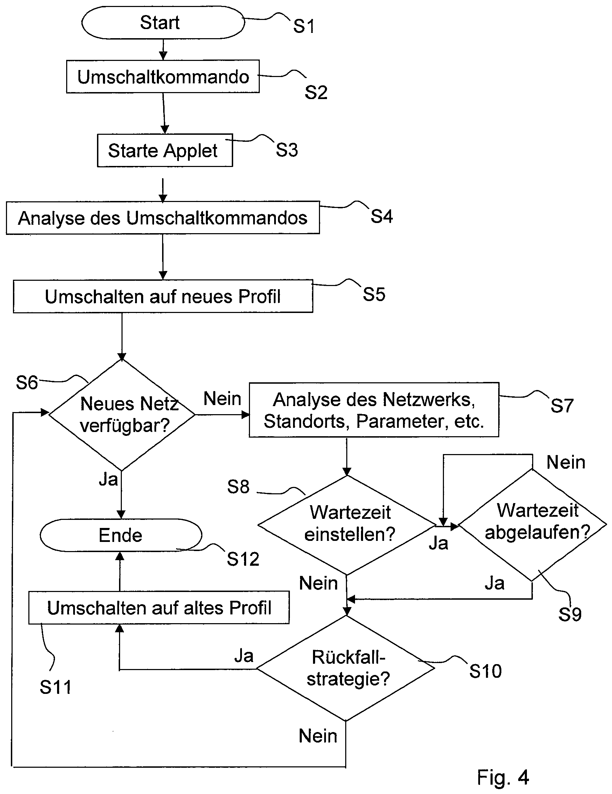

Die Verwaltungsfunktionen 8 sind zweite Funktionen gemäß der eingangs beschriebenen Art und dienen dazu, ein aktives Profil zu deaktivieren, ein inaktives Profil zu aktivieren, ein deaktiviertes Profil zu löschen, ein neues Profil zu laden und/ oder zwischen den Profilen umzuschalten. Diese zweiten Funktionen sind fester Bestandteil des Teilnehmeridentitätsmoduls 1 und unveränderlich implementiert. Die Verwaltung mittels dieser statischen Verwaltungsfunktionen 8 erfolgt nach Eingang eines Verwaltungskommandos S2 (siehe Figur 4) von einer entfernten Serverinstanz und ist gemäß Stand der Technik nicht adaptiv. Dies ist aber in vielen Fällen bzw. Einsatzszenarien ungünstig, da je nach Umgebung unterschiedliche Strategien während des Verwaltens anzuwenden sind.

Beispielsweise soll in manchen Fällen hart auf die zweiten Teilnehmeridentitätsdaten 13b umgeschaltet werden, egal ob eine Netzabdeckung im neuen Netz für die zweiten Teilnehmeridentitätsdaten 13b erkannt wurde. Das Teilnehmeridentitätsmodul 1 soll dann möglichst keine Rückschaltstrategie anwenden.

Alternativ soll manchmal sofort auf die ersten Teilnehmeridentitätsdaten 13a zurückgeschaltet (S11) werden, wenn keine Netzabdeckung S7 im neuen Netz erkannt wurde. Hier sollte eine möglichst zeitnahe Rückschaltung erfolgen, um einem Benutzer möglichst schnell einen Netzzugang zu ermöglichen.

In wiederum alternativen Fällen soll erst eine zeitlang versucht werden, eine Einbuchung in das neue Netz zu erhalten (S7 in Verbindung mit S8, S9), ehe zurückgeschaltet werden soll (S10, S11).

Um diese adaptiven Verwaltungen zu ermöglichen, wird erfindungsgemäß ein Verwaltungsapplikationscode 9, vorzugsweise in Form von Java-Applikationscode bzw. eines Java-Applets, bereitgestellt. Dieser Verwaltungsapplikationscode 9 weist erste Funktionen auf, die im Gegensatz zu den zweiten Funktionen 8 während des Lebenszyklus des Teilnehmeridentitätsmoduls 1 ersetzt, nachgeladen und/ oder aktualisiert werden können. Dazu wird entweder eine Luftschnittstelle (OTA) oder eine internetbasierte Schnittstelle (OTI) verwendet, wobei der nachgeladene und/oder aktualisierte Verwaltungsapplikationscode 9 über die Datenschnittstelle 3 in den Speicherbereich 2 eingebracht wird.

Der Verwaltungsapplikationscode 9 ist individuell programmiert. Der Verwaltungsapplikationscode 9 weist insbesondere folgende erste Funktionen auf:
- Empfang und Auswertung des Verwaltungskommandos von der entfernten Instanz (Schritt S4 in Figur 4) ;
- Überwachen der angestoßenen Verwaltung;
- Überwachen von Netzwerkparametern MCC, MNC (Schritt S7 der Figur 4) und Generieren von Verwaltungsinformationen aus diesen Parametern;
- Implementieren einer adaptiven Rückfallstrategie (Schritt S10 der Figur 4);
- Bereitstellen von Warteperioden während des Umschaltens (Schritte S8, S9 der Figur 4).

Damit der Verwaltungsapplikationscode 9 Einfluss auf die zweiten (statischen) Verwaltungsfunktionen 8 nehmen kann, ist eine zusätzliche Programmierschnittstelle 10, eine Verwaltungs-API, vorgesehen. Diese löst die eigentlichen Verwaltungsfunktionen 8 aus, insbesondere das Umschalten zwischen den ersten Teilnehmeridentitätsdaten 13a und den zweiten Teilnehmeridentitätsdaten 13b, das Laden von Teilnehmeridentitätsdaten 13, das Aktivieren/Deaktivieren von Teilnehmeridentitätsdaten 13 und das Löschen von Teilnehmeridentitätsdaten 13.

Der Verwaltungsapplikationscode 9 greift somit über die Programmierschnittstelle 10 auf die statischen Verwaltungsfunktionen 8 zu, welche wiederum direkt auf das Betriebssystem 5 zugreifen, hier durch die Pfeile dargestellt. Durch diesen Aufbau ist ein flexibleres Verwalten sowie das Implementieren alternativer Verwaltungsstrategien möglich, wie dies anhand von Figur 4 nachstehend detaillierter beschrieben wird.

Das in Figur 2 dargestellte Teilnehmeridentitätsmodul 1 ist mit einer Mehrzahl von Teilnehmerprofilen 11 ausgestattet. Jedes Teilnehmeridentitätsprofil 11 gemäß Figur 2 beinhaltet Teilnehmeridentitätsdaten 13a,13b,13n (bzw. einen Satz von Teilnehmeridentitätsdaten), die einen Teilnehmer an jeweils unterschiedlichen und/ oder gleichen Kommunikationsnetzen eindeutig identifizieren und/ oder authentisieren. Mit derartigen Teilnehmeridentitätsmodulen 1 ist es nicht mehr zwingend notwendig, dass ein Betreiber eines Netzwerkes für die Identifizierung und Authentisierung eines Teilnehmers an seinem Netzwerk auf Basis eines geschlossenen Vertrags, ein neues Teilnehmeridentitätsmodul 1 erzeugt und an den Teilnehmer in Form einer SIM Karte ausgibt. Stattdessen wird ein Profil 11 durch den Netzbetreiber auf Basis des geschlossenen Vertrages erstellt. Das Profil 11 wird dann in das bereits im Endgerät eingebrachte Teilnehmeridentitätsmodul 1 geladen und kann parallel zu anderen Profilen 11 existieren. Dadurch ergibt sich, dass das Teilnehmeridentitätsmodul 1 nicht mehr mechanisch lösbar in einem Endgerät eingebracht werden muss, stattdessen können fest verdrahtete Teilnehmeridentitätsmodule 1, kurz eUICCs, im Endgerät eingebracht sein. Dies spart Platz im Endgerät, wodurch andere Funktionalitäten im Endgerät realisiert werden können, ohne die Bauform des Endgeräts vergrößern zu müssen. Das erfindungsgemäße Verfahren ist insbesondere auf eUICC anzuwenden, da hier ein Benutzer nicht das Teilnehmeridentitätsmodul 1 wechseln muss, um mittels eines alternativen Vertrags Dienste eines Netzwerks nutzen zu können.

In Figur 3 ist ein Teilnehmerprofil 11a näher dargestellt. Dabei weist das Profil 11a einen Sicherheitsbereich 111 für den Netzwerkbetreiber auf. Der Sicherheitsbereich 111 ist vom Sicherheitsbereich 7 zu unterscheiden. Weiterhin weist ein Profil profilindividuellen Applikationscode 112 sowie eine profilindividuelles Dateisystem 113 auf. Jedes Profil 11 kann aktiv oder inaktiv sein, pro Teilnehmeridentitätsmodul 1 ist stets nur ein Profil 11 aktiv, das heißt, die Teilnehmeridentitätsdaten 13 des aktiven Profils 11 werden dazu verwendet, um einen Teilnehmer an einem Kommunikationsnetz zu authentisieren und/ oder identifizieren. Nur auf aktive Profile 11 kann umgeschaltet werden. Prinzipiell sind alle Profile gleichberechtigt und können unterschiedlichen oder gleichen Netzbetreibern zugeordnet sein.

Für jedes Profil ist ein eigener Profilschlüssel vorgesehen. Nur die aktivierten Profile 11 sind mit der Netzbetreibersicherheit verknüpft. Der Verwaltungsapplikationscode 9 verwaltet diese Sicherheitsbereiche mit und aktualisiert entsprechende Schlüssel.

In einer Ausgestaltung des Teilnehmeridentitätsmoduls 1 werden alle für ein Profil benötigten Daten und Parameter innerhalb des Profils abgelegt. Die Verwaltung der Daten/Parameter erfolgt mittels der variablen Funktionen, d.h. dem Verwaltungsapplikationscode 9.

Teilnehmeridentitätsdaten 13 gemäß Figur 2 umfassen insbesondere eine Angabe über den beim Betreiber des Netzwerkes verwendet Authentisierungsalgorithmus (Comp 128-1, Comp128-2, Comp 128-3, Milenage), die International Mobile Subscriber Identity (IMSI), die zur Authentisierung verwendeten kryptografischen Berechtigungsschlüssel, die Parametereinstellungen des verwendeten Algorithmus, ggf. netzbetreiberspezifische OTA-Schlüssel, um eine sichere OTA-Kommunikation zu ermöglichen, teilnehmerspezifische Daten, wie Name, Vorname, ID-Nummer, Geburtsdatum, Geburtsort etc; und/ oder ggf. zusätzliche netzbetreiberspezifische Daten, beispielsweise welche Dienste im jeweiligen Netz für den Teilnehmer freigeschaltet sind, welche Backup-Algorithmen verfügbar sind, und dergleichen. Diese Auflistung ist keinesfalls allumfassend und kann in alternativen Beispielen auch weniger, mehr oder andere Daten umfassen.

In Figur 4 ist ein Ablaufdiagramm eines erfindungsgemäßen Verfahrens dargestellt. Es wird hierbei davon ausgegangen, dass das Profil 13a aktiviert ist und der erste Satz von Teilnehmeridentitätsdaten 11a verwendet wurde, um den Teilnehmer am ersten Netz zu authentisieren. Gemäß Schritt S2 wird ein Umschaltkommando als Verwaltungskommando von einer entfernten Instanz, einem Subscription Manager, über das erste Kommunikationsnetz mittels der Datenschnittstelle 3 empfangen. Durch dieses Umschaltkommando S2 wird der Verwaltungsapplikationscode 9 gemäß Schritt S3 gestartet.

Im Folgeschritt S4 erfolgt die Analyse des Umschaltkommandos, insbesondere der Parameter des Umschaltkommandos. Die Parameter können sein: Hartes Umschalten ohne Netzabdeckung; Umschalten nur bei Verfügbarkeit des neuen Netzes; Umschalten nur wenn im Netzwerk ein bestimmter Dienst verfügbar ist oder dergleichen mehr. Anschließend erfolgt gemäß Schritt S5 die Umschaltung auf die zweiten Teilnehmeridentitätsdaten 13b. Dabei wird das Profil 11a deaktiviert und das zweite Profil 11b aktiviert. Mittels der zweiten Teilnehmeridentitätsdaten 13b des aktivierten zweiten Profils 11b versucht das Teilnehmeridentitätsmodul 1 eine Einbuchung in ein neues Kommunikationsnetz. Für den Schritt S5 wird die Umschalt-API 10 verwendet, um Zugriff auf die statischen Verwaltungsfunktionen 8 herzustellen.

Gemäß Schritt S6 überwacht der Verwaltungsapplikationscode 9, ob das neue Netz verfügbar ist. Falls das neue Netz verfügbar ist (Fall: Ja) ist das Verfahren beendet, es sei denn die Parameter gemäß Analyse aus Schritt S4 bedingen eine alternative Handlung, deren Fall hier nicht figürlich abgehandelt ist. Falls das neue Netz nicht verfügbar ist (Fall: Nein im Schritt S6) erfolgt eine Analyse der Netzwerkparameter gemäß Schritt S7. Insbesondere erfolgt die Überwachung der MNC- und MCC-Parameter, eine Überprüfung der Datei EF_Loci, ggf. die Überprüfung der Datei EF_FPLMN und der gleichen mehr. Zusätzlich werden auch Parameter bezüglich des Endgeräts überprüft, insbesondere ob das Endgerät bereit zum Umschalten war oder nicht.

In Abhängigkeit der Analyse aus den Schritten S4 und S7 wird nun im Schritt S8 entschieden, ob eine Wartezeit eingestellt werden sollte. Diese Wartezeit stellt beispielsweise während eines Roamingszenarios die erforderliche Zeitspanne bereit, bis das neue Netzwerk eine Authentisierung mittels der zweiten Teilnehmeridentitätsdaten 13b ermöglicht. Wird im Schritt S8 eine Wartezeit benötigt (Fall: Ja), wird diese gemäß Schritt S9 auf Ablauf überprüft. Danach wird mit Schritt S10 fortgefahren. Wird im Schritt S8 keine Wartezeit benötigt (Fall: Nein), wird ebenfalls mit Schritt S10 fortgefahren, nämlich einer Abfrage, ob eine Rückfallstrategie in Abhängigkeit der Schritte S4 und S7 notwendig ist. Wird eine Rückfallstrategie benötigt (Fall: Ja im Schritt S10) erfolgt eine Rückschaltung auf das erste Profil 13a gemäß der Verwaltungs-API 10 und den Verwaltungsfunktionen 8. Wird keine Rückfallstrategie benötigt (Fall: Nein im Schritt S10), so wird zu Schritt S6 zurückgesprungen und erneut die Netzverfügbarkeit sowie eine Analyse der Parameter gemäß Schritt 7 durchgeführt.

Sollte sich im Lebenszyklus des Teilnehmeridentitätsmoduls 1 eine Verwaltungsstrategie als sehr erfolgversprechend herausstellen, beispielsweise das Einstellen einer bestimmten Wartezeit aufgrund der Gegebenheiten des Endgeräts, mit dem das Teilnehmeridentitätsmodul in Kommunikationsverbindung mittels Datenschnittstelle 3 steht, so kann diese Strategie als Standardstrategie angewendet werden.

Alternativ ist es auch möglich, den Verwaltungsapplikationscode 9 zu ergänzen oder zu aktualisieren, um das Teilnehmeridentitätsmodul 1 an veränderte Netzwerkbedingungen anzupassen und die Umschaltung daher noch flexibler zu gestalten.

Alternativ ist es auch möglich, den Verwaltungsapplikationscode 9 komplett auszutauschen, um das Teilnehmeridentitätsmodul 1 an veränderte Netzwerkbedingungen anpassen zu können und die Verwaltung daher noch flexibler zu gestalten.

Ein wesentlicher Teil der variablen Funktionen, d.h. des Verwaltungsapplikationscodes 9 ist das Generieren von Bestätigungsnachrichten an die entfernte Serverinstanz. Eine Bestätigungsnachricht wird beispielsweise generiert, wenn sich das Teilnehmeridentitätsmodul erfolgreich mittels umgeschalteter Teilnehmeridentitätsdaten 13 am Netzwerk anmelden konnte. Eine Bestätigungsnachricht wird beispielsweise generiert, wenn sich das Teilnehmeridentitätsmodul nicht erfolgreich mittels umgeschalteter Teilnehmeridentitätsdaten 13 am Netzwerk anmelden konnte. Eine Bestätigungsnachricht wird beispielsweise generiert, wenn das Netzwerk eine Anfrage an das Teilnehmeridentitätsmodul versendet hat. Derartige Anfragen sind insbesondere Netzwerkstatusanfragen, Standortinformationen und/ oder Statusinformationen bezüglich der Teilnehmerprofile 11, wobei die Bestätigungen mittels der variablen Funktionen, d.h. dem Verwaltungsapplikationscode 9 generiert werden.

Die Verwaltungsstrategie kann auch vorsehen, dass Bestätigungsnachrichten von Verwaltungskommandos, initiiert vom Netzwerk, erst nach Ablauf einer Warteszeit an die Netzwerkinstanz gesendet werden, um ggf. Folgeverwaltungskommandos des Netzwerks verzögern zu können.

In einer figürlich nicht dargestellten Variante legt der Verwaltungsapplikationscode 9 vor dem Empfangen des Umschaltkommandos S2 selbstständig ein Sicherheitsprofil 11 an, wobei das Sicherheitsprofil 11 gleich dem aktivierten Teilnehmerprofil 11 ist. Wird ein Umschaltkommando S2 von der entfernten Instanz im Teilnehmeridentitätsmodul 1 empfangen und ein sofortiges Umschalten S5 auf die zweiten Teilnehmeridentitätsdaten 13b gefordert, ist sichergestellt, dass ein Zurückschalten S11 auf die im Sicherheitsprofil 11 abgelegten ersten Teilnehmeridentitätsdaten 13a jederzeit möglich ist.

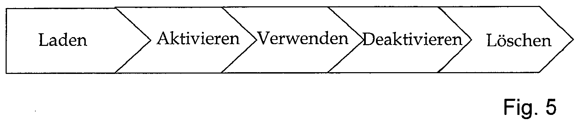

In Figur 5 ist der Lebenszyklus von Teilnehmeridentitätsdaten 13, d.h. von einem Satz von Teilnehmeridentitätsdaten 13, in einem Teilnehmeridentitätsmodul 1 dargestellt. Der gesamte Lebenszyklus wird dabei mittels des Verwaltungsapplikationscodes 9 und den statischen Verwaltungsfunktionen 8 verwaltet, wobei erfindungsgemäß der Verwaltungsapplikationscode 9, d.h. die zweiten Funktionen, die Verwaltung variabel steuert. Dabei werden die Teilnehmeridentitätsdaten 13 auf Basis eines Ladekommandos in dem Speicherbereich 2 des Teilnehmeridentitätsmoduls 1 abgelegt. Das Ladekommando kann in Abhängigkeit des Lademechanismus variieren, so dass der variable Verwaltungsapplikationscode 9 adaptiv das Teilnehmeridentitätsmodul 1 verwaltet. Die Teilnehmeridentitätsdaten 13 werden mittels Aktivierungskommando aktiviert. Dabei wird eine CRC-Prüfsumme der geladenen Teilnehmeridentitätsdaten 13 mit einer vom Netzwerk vor der Aktivierung bereitgestellten CRC-Prüfsumme verglichen. Bei Übereinstimmung der Prüfsummen werden die Teilnehmeridentitätsdaten 13 aktiviert. Ab diesem Zeitpunkt können sie im Teilnehmeridentitätsmodul 1 verwendet werden, beispielsweise kann mittels Umschaltkommando S2 auf diese Teilnehmeridentitätsdaten 13 umgeschaltet werden. Der variable Verwaltungsapplikationscode 9 überprüft dabei, ob die Teilnehmeridentitätsdaten 13 für eine Umschaltung auch aktiviert sind und unterbindet eine Umschaltung auf inaktive Teilnehmeridentitätsdaten. Sollen die Teilnehmeridentitätsdaten 13 nicht mehr für eine Authentisierung/Identifizierung des Teilnehmers an einem Netzwerk verwendet werden können, können diese mittels Deaktivierungskommando deaktiviert werden. Schließlich können die Teilnehmeridentitätsdaten 13 mittels eines Löschkommandos gelöscht werden, wodurch der Speicherbereich 2 des Teilnehmeridentitätsmoduls für neue Teilnehmeridentitätsdaten 13 genutzt werden kann.

Das gesamte Teilnehmeridentitätsmodul 1 kann deaktiviert werden, wenn die letzten Teilnehmeridentitätsdaten (d.h. der letzte Satz von Teilnehmeridentitätsdaten) 13 deaktiviert und/oder gelöscht werden. Ein derartiges Deaktivieren des Moduls 1 kann anhand des variablen Verwaltungsapplikationscodes 9 verhindert werden.

### Bezugszeichenliste

- 1: Teilnehmeridentitätsmodul
- 2: Speicherbereich
- 3: Datenschnittstelle
- 4: Recheneinheit
- 5: Betriebssystem
- 6: Virtuelle Laufzeitumgebung, JCRE
- 7: Sicherheitsbereich für Modulherausgeber
- 8: Feste Verwaltungsfunktionen
- 9: Variabler Java-Verwaltungsapplikationscode
- 10: Verwaltungsprogrammierschnittstelle
- 11a,b,n: Teilnehmerprofile, Teilnehmerslots
111 Sicherheitsbereich des Profils
112 Profilindividueller Applikationscode
113 Profilindividuelles Dateisystem, Teilnehmeridentitätsdaten
- 13a,b,n: Sätze von Teilnehmeridentitätsdaten
- S1- S12: Verfahrensschritte

## Patentansprüche

1. Teilnehmeridentitätsmodul (1) zum Authentisieren eines Teilnehmers an einem Kommunikationsnetzwerk, wobei das Teilnehmeridentitätsmodul (1) aufweist:
- einen ersten Satz von Teilnehmeridentitätsdaten (13a) zum Authentisieren des Teilnehmers;
- zumindest einen zweiten Satz von Teilnehmeridentitätsdaten (13b) zum Authentisieren des Teilnehmers, wobei sich der erste Satz von Teilnehmeridentitätsdaten (13a) von dem zweiten Satz von Teilnehmeridentitätsdaten (13b) unterscheidet; und
- ein Mittel zum Verwalten des ersten Satzes von Teilnehmeridentitätsdaten (13a) und des zweiten Satzes von Teilnehmeridentitätsdaten (13b), wobei das Verwalten durch statische Verwaltungsfunktionen (8) realisiert ist;
**dadurch gekennzeichnet, dass**:
- das Mittel zum Verwalten weiterhin Verwaltungsapplikationscode (9) aufweist und dieser Verwaltungsapplikationscode (9) ein variables Verwalten durch Anpassen der statischen Verwaltungsfunktionen an die Umgebungsparameter des Teilnehmeridentitätsmoduls (1) ermöglicht.

2. Teilnehmeridentitätsmodul (1) nach Anspruch 1, wobei der Verwaltungsapplikationscode (9) erste Funktionen (S6, S7, S8, S9, S10, S11) umfasst, durch die ein variables Umschalten zwischen dem ersten Satz von Teilnehmeridentitätsdaten (13a) und dem zweiten Satz von Teilnehmeridentitätsdaten (13b) möglich ist.

3. Teilnehmeridentitätsmodul (1) nach einem der vorhergehenden Ansprüche, wobei der Verwaltungsapplikationscode (9) über eine Luftschnittstelle des Kommunikationsnetzwerks aktualisierbar und/ oder austauschbar ist.

4. Teilnehmeridentitätsmodul (1) nach einem der vorhergehenden Ansprüche, wobei die statischen Verwaltungsfunktionen (8) zweite Funktionen sind und wobei die ersten Funktionen (S6, S7, S8, S9, S10, S11) des Verwaltungsapplikationscodes (9) mittels einer Programmierschnittstelle (10) auf diese zweiten Funktionen zugreifen.

5. Teilnehmeridentitätsmodul (1) nach einem der vorhergehenden Ansprüche, wobei die ersten Funktionen (S6, S7, S8, S9, S10, S11) ein Überwachen von aktuellen Standortparametern (S7) umfassen.

6. Teilnehmeridentitätsmodul nach einem der vorhergehenden Ansprüche, wobei die ersten Funktionen (S6, S7, S8, S9, S10, S11) ein Generieren von Warteperioden (S8, S9) umfassen.

7. Teilnehmeridentitätsmodul (1) nach einem der vorhergehenden Ansprüche, wobei die ersten Funktionen (S6, S7, S8, S9, S10, S11) ein adaptives Zurückschalten (S11) auf die ersten Teilnehmeridentitätsdaten (13a) umfassen.

8. Teilnehmeridentitätsmodul (1) nach einem der vorhergehenden Ansprüche, wobei die statischen Verwaltungsfunktionen (8) Umschaltfunktionen zum Umschalten von den ersten Teilnehmeridentitätsdaten (13a) auf die zweiten Teilnehmeridentitätsdaten (13b) sind.

9. Teilnehmeridentitätsmodul (1) nach einem der vorhergehenden Ansprüche, wobei der Verwaltungsapplikationscode (9) als Java-Applikationscode ausgebildet ist.

10. Verfahren zum Verwalten eines Teilnehmeridentitätsmoduls (1) mit einem ersten Satz von Teilnehmeridentitätsdaten (13a) und einem zweiten Satz von Teilnehmeridentitätsdaten (13b), mit den Verfahrensschritten:
- Erhalten (S1) eines Verwaltungskommandos im Teilnehmeridentitätsmoduls (1);
- Verwalten (S5) des ersten Satzes von Teilnehmeridentitätsdaten (13a) und des zweiten Satzes von Teilnehmeridentitätsdaten (13b) mittels des Verwaltungskommandos;
**dadurch gekennzeichnet, dass**:
- vor dem Schritt des Verwaltens (S5) Verwaltungsapplikationscode (9) im Teilnehmeridentitätsmodul (1) gestartet (S3) wird;
- nach dem Schritt des Verwaltens (S5) durch den Verwaltungsapplikationscode (9) Kommunikationsnetzwerkparameter (S7) ausgewertet (S6, S8, S9, S10, S11) werden; und
- in Abhängigkeit des Auswertens (S6, S8, S9, S10, S11) der Schritt des Verwaltens (S5) dahingehend adaptiert (S11) wird, dass eine statische Verwaltungsfunktion an Umgebungsparameter des Teilnehmeridentitätsmoduls (1) angepasst wird.

11. Verfahren nach Anspruch 10, wobei der Verwaltungsapplikationscode (9) für den Schritt des Verwaltens (S5, S11) auf statische Verwaltungsfunktionen (8) des Teilnehmeridentitätsmoduls (1) mittels einer Verwaltungsprogrammierschnittstelle (10) zugreift.

12. Verfahren nach einem der Ansprüche 10 oder 11, wobei das Auswerten (S6, S7, S8, S9, S10, S11) die Analyse des Standorts (S7) umfasst.

13. Verfahren nach einem der vorhergehenden Ansprüche 10 bis 12, wobei das Verwalten sowohl das Umschalten, das Laden, das Aktivieren, das Deaktivieren sowie das Löschen von Teilnehmeridentitätsdaten (13) umfasst.

14. Verwendung eines Teilnehmeridentitätsmoduls (1) gemäß den Ansprüchen 1 bis 9 in einem mobilen Kommunikationsendgerät.

15. System bestehend aus dem zumindest einen Teilnehmeridentitätsmodul (1) gemäß den Ansprüchen 1 bis 9 und einer entfernten Instanz, wobei die entfernte Instanz ein Umschaltkommando (S2) zum Umschalten (S5) von einem ersten Satz von Teilnehmeridentitätsdaten (13a) auf einen zweiten Satz von Teilnehmeridentitätsdaten (13b) an das zumindest eine Teilnehmeridentitätsmodul (1) sendet.

## Claims

1. A subscriber identity module (1) for authenticating a subscriber on a communication network, with the subscriber identity module (1) having:
- a first set of subscriber identity data (13a) for authenticating the subscriber;
- at least a second set of subscriber identity data (13b) for authenticating the subscriber, with the first set of subscriber identity data (13a) differing from the second set of subscriber identity data (13b); and
- a means for managing the first set of subscriber identity data (13 a) and the second set of subscriber identity data (13b), with the managing being realized by static management functions (8);
**characterized in that**:
- the managing means further has management application code (9), and said management application code (9) enables a variable managing by adapting the static management functions to the environment parameters of the subscriber identity module (1).

2. The subscriber identity module (1) according to claim 1, wherein the management application code (9) comprises first functions (S6, S7, S8, S9, S10, S11) which make possible a variable switching between the first set of subscriber identity data (13a) and the second set of subscriber identity data (13b).

3. The subscriber identity module (1) according to either of the previous claims, wherein the management application code (9) is updatable and/or exchangeable via an over-the-air interface of the communication network.

4. The subscriber identity module (1) according to any of the previous claims, wherein the static management functions (8) are second functions, and wherein the first functions (S6, S7, S8, S9, S10, S11) of the management application code (9) access said second functions by means of a programming interface (10).

5. The subscriber identity module (1) according to any of the previous claims, wherein the first functions (S6, S7, S8, S9, S10, S11) comprise a monitoring of current location parameters (S7).

6. The subscriber identity module according to any of the previous claims, wherein the first functions (S6, S7, S8, S9, S10, S11) comprise a generating of waiting periods (S8, S9).

7. The subscriber identity module (1) according to any of the previous claims, wherein the first functions (S6, S7, S8, S9, S10, S11) comprise an adaptive switching-back (S11) to the first subscriber identity data (13a).

8. The subscriber identity module (1) according to any of the previous claims, wherein the static management functions (8) are switching functions for switching from the first subscriber identity data (13a) to the second subscriber identity data (13b).

9. The subscriber identity module (1) according to any of the previous claims, wherein the management application code (9) is configured as Java application code.

10. A method for managing a subscriber identity module (1) having a first set of subscriber identity data (13a) and a second set of subscriber identity data (13b), having the method steps of:
- receiving (S1) a management command in the subscriber identity module (1);
- managing (S5) the first set of subscriber identity data (13a) and the second set of subscriber identity data (13b) by means of the management command;
**characterized in that**:
- before the managing step (S5) management application code (9) is started (S3) in the subscriber identity module (1);
- after the managing step (S5) communication network parameters (S7) are evaluated (S6, S8, S9, S10, S11) by the management application code (9); and
- in dependence on the evaluating (S6, S8, S9, S10, S11) the managing step (S5) is adapted (S11) to the effect that a static management function is adapted to environment parameters of the subscriber identity module (1).

11. The method according to claim 10, wherein the management application code (9) accesses static management functions (8) of the subscriber identity module (1) by means of a management programming interface (10) for the managing step (S5, S11).

12. The method according to either of claims 10 to 11, wherein the evaluating (S6, S7, S8, S9, S10, S11) comprises the analysis of the location (S7).

13. The method according to any of the preceding claims 10 to 12, wherein the managing comprises the switching, loading, activating, deactivating and deleting of subscriber identity data (13).

14. A use of a subscriber identity module (1) according to claims 1 to 9 in a mobile communication end device.

15. A system consisting of the at least one subscriber identity module (1) according to claims 1 to 9 and a remote entity, wherein the remote entity transmits to the at least one subscriber identity module (1) a switching command (S2) for switching (S5) from a first set of subscriber identity data (13a) to a second set of subscriber identity data (13b).

## Revendications

1. Module d'identité d'abonné (1) destiné à l'authentification d'un abonné à un réseau de communication, le module d'identité d'abonné (1) comportant:
- un premier jeu de données d'identité d'abonné (13a) pour l'authentification de l'abonné;
- au moins un deuxième jeu de données d'identité d'abonné (13b) pour l'authentification de l'abonné, le premier jeu de données d'identité d'abonné (13a) se différenciant du deuxième jeu de données d'identité d'abonné (13b); et
- un moyen de gestion du premier jeu de données d'identité d'abonné (13a) et du deuxième jeu de données d'identité d'abonné (13b), la gestion étant réalisée par des fonctions statiques de gestion (8);
**caractérisé en ce que**:
- le moyen de gestion comporte en outre un code d'application de gestion (9) et que ce code d'application de gestion (9) permet une gestion variable par réglage des fonctions statiques de gestion d'après les paramètres d'environnement du module d'identité d'abonné (1).

2. Module d'identité d'abonné (1) selon la revendication 1, le code d'application de gestion (9) comprenant de premières fonctions (S6, S7, S8, S9, S10, S11) par lesquelles une commutation variable entre le premier jeu de données d'identité d'abonné (13a) et le deuxième jeu de données d'identité d'abonné (13b) est possible.

3. Module d'identité d'abonné (1) selon une des revendications précédentes, le code d'application de gestion (9) pouvant être actualisé ou échangé par l'intermédiaire d'une interface radio du réseau de communication.

4. Module d'identité d'abonné (1) selon une des revendications précédentes, les fonctions statiques de gestion (8) étant des deuxièmes fonctions, et les premières fonctions (S6, S7, S8, S9, S10, S11) du code d'application de gestion (9) accédant à ces deuxièmes fonctions au moyen d'une interface de programmation (10).

5. Module d'identité d'abonné (1) selon une des revendications précédentes, les premières fonctions (S6, S7, S8, S9, S10, S11) comprenant une surveillance de paramètres d'emplacement (S7) actuels.

6. Module d'identité d'abonné selon une des revendications précédentes, les premières fonctions (S6, S7, S8, S9, S10, S11) comprenant une génération de périodes d'attente (S8, S9).

7. Module d'identité d'abonné (1) selon une des revendications précédentes, les premières fonctions (S6, S7, S8, S9, S10, S11) comprenant une commutation (S11) adaptative en retour sur les premières données d'identité d'abonné (13a).

8. Module d'identité d'abonné (1) selon une des revendications précédentes, les fonctions statiques de gestion (8) étant des fonctions de commutation pour la commutation des premières données d'identité d'abonné (13a) aux deuxièmes données d'identité d'abonné (13b).

9. Module d'identité d'abonné (1) selon une des revendications précédentes, le code d'application de gestion (9) étant conçu en tant que code d'application Java.

10. Procédé de gestion d'un module d'identité d'abonné (1) ayant un premier jeu de données d'identité d'abonné (13a) et un deuxième jeu de données d'identité d'abonné (13b), comprenant les étapes de procédé:
- réception (S1) d'un ordre de gestion dans le module d'identité d'abonné (1);
- gestion (S5) du premier jeu de données d'identité d'abonné (13a) et du deuxième jeu de données d'identité d'abonné (13b) au moyen de l'ordre de gestion;
**caractérisé en ce que**:
- avant l'étape de la gestion (S5), le code d'application de gestion (9) est démarré (S3) dans le module d'identité d'abonné (1);
- après l'étape de la gestion (S5) par le code d'application de gestion (9), des paramètres de réseau de communication (S7) sont évalués (S6, S8, S9, S10, S11); et
- en fonction de l'évaluation (S6, S8, S9, S10, S11), l'étape de la gestion (S5) est adaptée (S11) de façon à ce qu'une fonction statique de gestion soit réglée d'après des paramètres d'environnement du module d'identité d'abonné (1).

11. Procédé selon la revendication 10, le code d'application de gestion (9) accédant, pour l'étape de la gestion (S5, S11), à des fonctions statiques de gestion (8) du module d'identité d'abonné (1) au moyen d'une interface de programmation de gestion (10).

12. Procédé selon une des revendications 10 ou 11, l'évaluation (S6, S7, S8, S9, S10, S11) comprenant l'analyse de l'emplacement (S7).

13. Procédé selon une des revendications précédentes de 10 à 12, la gestion comprenant tant la commutation, le chargement, l'activation, la désactivation, que l'effacement de données d'identité d'abonné (13).

14. Utilisation d'un module d'identité d'abonné (1) selon les revendications de 1 à 9 dans un terminal de communication mobile.

15. Système consistant en le au moins un module d'identité d'abonné (1) selon les revendications de 1 à 9 et en une instance éloignée, l'instance éloignée envoyant au au moins un module d'identité d'abonné (1) un ordre de commutation (S2) pour commuter (S5) d'un premier jeu de données d'identité d'abonné (13a) à un deuxième jeu de données d'identité d'abonné (13b).
